# EUROPÄISCHE PATENTSCHRIFT

(11) **EP 1 587 367 B1**
(45) Veröffentlichungstag und Bekanntmachung des Hinweises auf die Patenterteilung: **23.05.2007**
(21) Anmeldenummer: 04700451.0
(22) Anmeldetag: 07.01.2004
(51) Int. Cl.: A01N 43/90, A01N 43/38

(54) **SELEKTIVE HERBIZIDE AUF BASIS VON SUBSTITUIERTEN, CYCLISCHEN DICARBONYLVERBINDUNGEN UND SAFENERN**
SELECTIVE HERBICIDES BASED ON SUBSTITUTED CYCLIC DICARBONYL COMPOUNDS AND SAFENERS
HERBICIDES SELECTIFS A BASE DE COMPOSES DICARBONYLE CYCLIQUES SUBSTITUES ET DE PHYTOPROTECTEURS

(30) Priorität: 20.01.2003 DE 10301806
(43) Veröffentlichungstag der Anmeldung: 26.10.2005
(73) Patentinhaber: Bayer CropScience AG, 40789 Monheim (DE)
(72) Erfinder: FEUCHT, Dieter, 65760 Eschborn (DE); FISCHER, Reiner, 40789 Monheim (DE); LEHR, Stefan, 65835 Liederbach (DE); BOJACK, Guido, 65207 Wiesbaden (DE); AULER, Thomas, 42799 Leichlingen (DE); HILLS, Martin, 65510 Idstein (DE); ROSINGER, Chris, 65719 Hofheim (DE); WILLMS, Lothar, 65719 Hofheim (DE); ZIEMER, Frank, 65830 Kriftel (DE)
(86) Internationale Anmeldenummer: PCT/EP2004/000038
(87) Internationale Veröffentlichungsnummer: WO 2004/064520

(56) Entgegenhaltungen:
- EP-A- 1 026 159
- WO-A-02/063957
- WO-A-03/029213
- WO-A-03/045957
- WO-A-20/04037749
- DATABASE WPI Section Ch, Week 200031 Derwent Publications Ltd., London, GB; Class C02, AN 2000-353373 XP002286363 & JP 2000 086628 A (OTSUKA KAGAKU YAKUHIN KK) 28. März 2000 (2000-03-28) in der Anmeldung erwähnt & DATABASE CHEMABS [Online] CHEMICAL ABSTRACTS SERVICE, COLUMBUS, OHIO, US; gefunden im STN-INTERNATIONAL Database accession no. 132:222440 CA

## Beschreibung

Die Erfindung betrifft neue selektiv-herbizide Wirkstoffkombinationen, die substituierte, cyclische Ketoenole einerseits und zumindest eine die Kulturpflanzen-Verträglichkeit, verbessernde Verbindung andererseits enthalten und mit besonders gutem Erfolg zur selektiven Unkrautbekämpfung in verschiedenen Nutzpflanzenkulturen verwendet werden können.

Bekannt mit herbizider Wirkung sind 4-Chlor- und 4-Nitro-4-phenyl-pyrazolyl-3,5-dione (WO 99/20610) und mit akarizider und insektizider Wirkung 3-Halogen- und 3-Nitro-3-phenylsubstituierte Pyrrolidin-2,4-dione und 4-Oxofuran-2-one (JP 12 086 628) sowie Chlorketolaktame (WO 03/029 213).

Die Wirkung dieser Verbindungen und/oder ihre Verträglichkeit gegenüber Kulturpflanzen sind jedoch nicht unter allen Bedingungen ganz zufriedenstellend.

Überraschenderweise wurde nun gefunden, dass bestimmte substituierte, cyclische Dicarbonylverbindungen bei gemeinsamer Anwendung mit den im weiteren beschriebenen, die Kulturpflanzen-Verträglichkeit verbessernden Verbindungen (Safenern/Antidots) ausgesprochen gut die Schädigung der Kulturpflanzen verhindern und besonders vorteilhaft als breit wirksame Kombinationspräparate zur selektiven Bekämpfung von unerwünschten Pflanzen in Nutzpflanzenkulturen, wie z.B. in Getreide aber auch Mais, Soja und Reis, verwendet werden können.

Gegenstand der Erfindung sind selektiv-herbizide Mittel enthaltend einen wirksamen Gehalt an einer Wirkstoffkombination umfassend.
(a) mindestens eine substituierte, cyclische Dicarbonylverbindung der Formel (I) 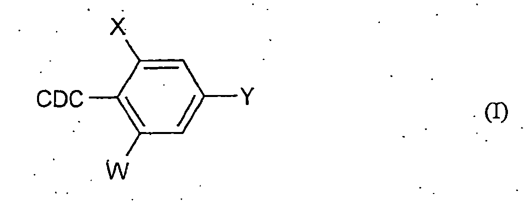
in welcher
- W: für Wasserstoff, Chlor, Brom; Methyl, Ethyl, Methoxy oder Ethoxy steht,
- X: für Chlor, Brom, Methyl, Ethyl, Propyl, Methoxy, Ethoxy, Trifluormethyl, Difluormethoxy, Trifluormethoxy oder Cyano steht,
- Y: für Wasserstoff, Chlor, Brom, Methyl, Triflourmethyl oder für den Rest 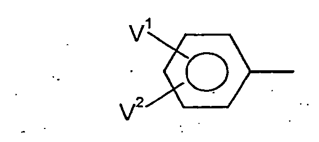 steht, worin
- V¹: für Wasserstoff, Fluor, Chlor, Brom, Methyl, Ethyl, tert.-Butyl, Methoxy, Trifluormethyl oder Trifluormethoxy steht,
- V²: für Wasserstoff, Fluor, Chlor, Methyl, Methoxy oder Trifluormethyl steht,
- CDC: für eine der Gruppen 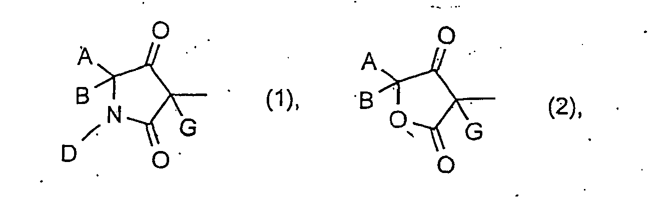 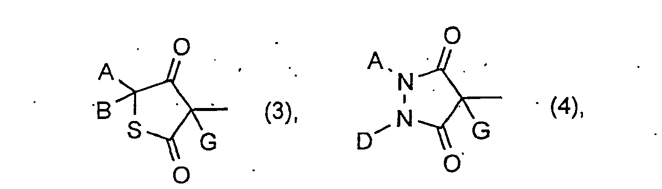 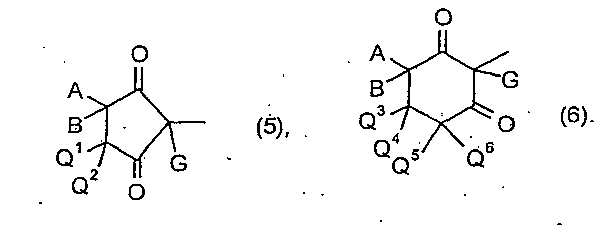 steht,
- A: für Wasserstoff, jeweils gegebenenfalls einfach bis dreifach durch Fluor substituiertes C₁-C₄-Alkyl oder C₁-C₂-Alkoxy-C₁-C₂-alkyl, gegebenenfalls einfach durch Fluor, Methyl oder Methoxy substituiertes C₃-C₆-Cycloalkyl steht,
- B: für Wasserstoff, Methyl oder Ethyl steht, oder
- A, B: und das Kohlenstoffatom an das sie gebunden sind für gesättigtes C₅-C₆-Cycloalkyl stehen, in welchem gegebenenfalls ein Ringglied durch Sauerstoff ersetzt ist und welches gegebenenfalls einfach durch Methyl, Trifluormethyl, Methoxy, Ethoxy, Propoxy, Butoxy oder Isobutoxy substituiert ist, mit der Maßgabe, dass Q³ dann ganz besonders bevorzugt für Wasserstoff steht, oder
- A, B: und das Kohlenstoffatom, an das sie gebunden sind, für C₅-C₆-Cycloalkyl stehen, welches durch eine mit zwei nicht direkt benachbarten Sauerstoffatomen enthaltende Alkylendioxyl-Gruppe substituiert ist, mit der Maßgabe, dass Q³ dann ganz besonders bevorzugt für Wasserstoff steht,
- D: für Wasserstoff, für jeweils gegebenenfalls einfach bis dreifach durch Fluor substituiertes C₁-C₄-Alkyl, C₃-C₄-Alkenyl, C₁-C₂-Alkoxy-C₂-C₃-akyl oder C₃-C₆-Cycloalkyl, in welchem gegebenenfalls eine Methylengruppe durch Sauerstoff oder Schwefel ersetzt ist oder (jedoch nicht im Fall der Verbindungen der Formeln (I-1)) für jeweils gegebenenfalls einfach bis zweifach durch Fluor, Chlor, Brom, Methyl, Ethyl, n-Propyl, iso-Propyl, Methoxy, Ethoxy, Trifluormethyl oder Trifluormethoxy substituiertes Phenyl oder Pyridyl steht, oder
- A und D: gemeinsam für gegebenenfalls substituiertes C₃-C₅-Alkandiyl stehen, worin gegebenenfalls ein Kohlenstoffatom durch Sauerstoff oder Schwefel ersetzt ist und welches gegebenenfalls einfach oder zweifach durch Methyl substituiert ist, oder
A und D (im Fall der Verbindungen der Formel (I-1)) gemeinsam mit den Atomen, an die sie gebunden sind, für die Gruppe 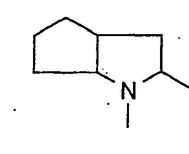 stehen,
AD-1
- A und Q¹: gemeinsam für gegebenenfalls einfach oder zweifach durch Methyl oder Methoxy substituiertes C₃-C₄-Alkandiyl stehen, oder
- Q¹: für Wasserstoff steht,
- Q²: für Wasserstoff steht,
- Q⁴, Q⁵: und unabhängig voneinander für Wasserstoff oder Methyl stehen,
- Q³: für Wasserstoff, Methyl, Ethyl oder C₃-C₆-Cycloalkyl steht, oder
- Q³ und Q⁴: gemeinsam mit dem Kohlenstoff, an den sie gebunden sind, für einen gegebenenfalls einfach durch Methyl oder Methoxy substituierten gesättigten C₅-C₆-Ringstehen, in welchem gegebenenfalls ein Ringglied durch Sauerstoff oder Schwefel ersetzt ist, mit der Maßgabe, dass A dann ganz besonders bevorzugt für Wasserstoff steht, und
- G: für Chlor und Nitro steht, einschließlich aller isomeren Formen, und zumindest eine die Kulturpflanzen-Verträglichkeit verbessernde Verbindung ("Hesbizid-Safener") aus der folgenden Gruppe von Verbindungen. Cloquintocet-mexyl, Fanchlorazole-ethyl, Isoxadifen-ethyl, Mefenpyr-diethyl, Furilazole, Fenclorim, Cumyluron, Dymron Dimepiperate oder die Verbindungen 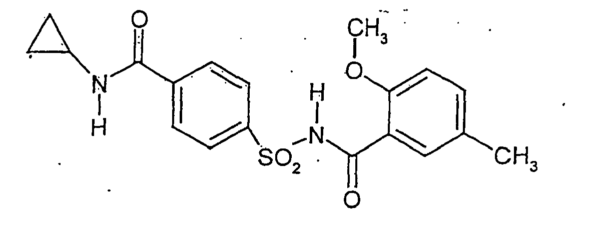 und

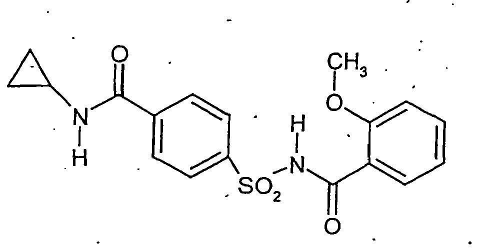

In den Definitionen sind die Kohlenwasserstoffketten, wie in Alkyl oder Alkandiyl - auch in Verbindung mit Heteroatomen, wie in Alkoxy -jeweils geradkettig oder verzweigt.

Die Verbindungen der Formel (I) können, auch in Abhängigkeit von der Art der Substituenten, als geometrische und/oder optische Isomere oder Isomerengemische, in unterschiedlicher Zusammensetzung vorliegen, die gegebenenfalls in üblicher Art und Weise getrennt werden können. Sowohl die reinen Isomeren als auch die Isomerengemische, sowie deren Verwendung und sie enthaltende Mittel sind Gegenstand der vorliegenden Erfindung. Im folgenden wird der Einfachheit halber jedoch stets von Verbindungen der Formel (I) gesprochen, obwohl sowohl die reinen Verbindungen als gegebenenfalls auch Gemische mit unterschiedlichen Anteilen an isomeren Verbindungen gemeint sind.

Unter Einbeziehung der Bedeutungen (1) bis (6) der Gruppe CDC ergeben, sich folgende hauptsächliche Strukturen (I-1) bis (I-6): 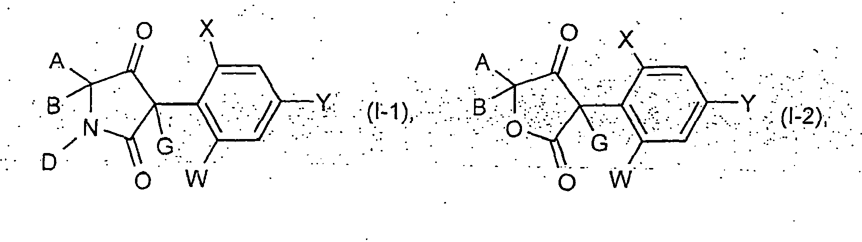 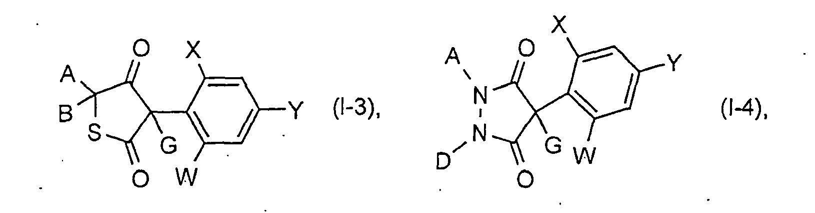 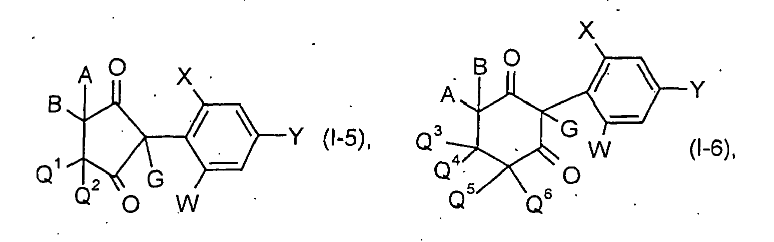 worin
A, B, D, G, Q¹, Q², Q³, Q⁴, Q⁵, Q⁶, W, X und Y die oben angegebene Bedeutung haben.

Gesättigte oder ungesättigte Kohlenwasserstoffreste wie Alkyl oder Alkenyl können, auch in Verbindung mit Heteroatomen, wie z.B. in Alkoxy, soweit möglich, jeweils geradkettig oder verzweigt sein.

Gegebenenfalls substituierte Reste können, sofern nichts anderes angegeben ist, einfach oder mehrfach substituiert sein, wobei bei Mehrfachsubstitutionen die Substituenten gleich oder verschieden sein können.

Im einzelnen seien außer den bei den Beispielen genannten Verbindungen die folgenden Verbindungen der Formel (I-1) genannt:

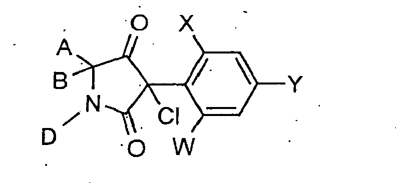

**Tabelle 1: W = CH₃, X = CH₃, Y = CH₃.**

| A | B | D |
|---|---|---|
| CH₃ | CH₃ | H |
| C₂H₅ | CH₃ | H |
| C₃H₇ | CH₃ | H |
| i-C₃H₇ | CH₃ | H |
| 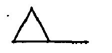 | CH₃ | H |
| -(CH₂)₄ | | H |
| -(CH₂)₅- | | H |
| -(CH₂)₂-O-(CH₂)₂- | | H |
| -(CH₂)₂-O-(CH₂)₃- | | H |
| -CH₂-O-(CH₂)₃- | | H |
| -CH₂-CHCH₃-(CH₂)₃- | | H |
| (CH₂)₂-CHCH₃-(CH₂)₂- | | H |
| -(CH₂)₂-CHOCH₃-(CH₂)₂- | | H |
| -(CH₂)₂-CHOC₂H₅-(CH₂)₂- | | H |
| -(CH₂)₂-C(CH₃)₂-(CH₂)₂- | | H |

- **Tabelle 2:**: A, B und D wie in Tabelle 1 angegeben
W=CH₃; X=CH₃; Y=Cl.
- **Tabelle 3:**: A, B und D wie in Tabelle 1 angegeben
W = CH₃; X = CH₃; Y = Br.
- **Tabelle 4:**: A, B und D wie in Tabelle 1 angegeben
W = C₂H₅; X = CH₃; Y = Cl.
- **Tabelle 5:**: A, B und D wie in Tabelle 1 angegeben
W = C₂H₅; X = CH₃; Y = Br.
- **Tabelle 6**:: A, B und D wie in Tabelle 1 angegeben
W = C₂H₅; X = C₂H₅; Y = Cl.
- **Tabelle 7**:: A, B und D wie in Tabelle 1 angegeben
W = C₂H₅; X = C₂H₅; Y =.Br.
- **Tabelle 8**:: A, B und D wie in Tabelle 1 angegeben
W = CH₃; X = Cl; Y = Cl.
- **Tabelle 9**:: A, B und D wie in Tabelle 1 angegeben.
W = CH₃; X = Br; Y = Br.
- **Tabelle 10**:: A, B und D wie in Tabelle 1 angegeben
W = CH₃; X = Cl; Y = Br.
- **Tabelle 11**:: A, B und D wie in Tabelle 1 angegeben
W = CH₃; X = Br; Y = Cl.
- **Tabelle 12:**: A, B und D wie in Tabelle 1 angegeben
W = C₂H₅; X = Cl; Y = Cl.
- **Tabelle 13:**: A, B und D wie in Tabelle 1 angegeben
W = C₂H₅; X = Br; Y = Br.
- **Tabelle 14:**: A, B und D wie in Tabelle 1 angegeben
W = C₂H₅; X = Cl; Y = Br.
- **Tabelle 15:**: A, B und.D wie in Tabelle 1 angegeben
W=C₂H₅; X=Br; Y=Cl
- **Tabelle 16:**: A, B und D wie in Tabelle 1 angegeben
W = CH₃; X = CH₃; Y = (4-Cl-C₆H₄).
- **Tabelle 17:**: A, B und D wie in Tabelle 1 angegeben
W = CH₃; X = Cl; Y = (4-Cl-C₆H₄).
- **Tabelle 18:**: A, B und D wie in Tabelle 1 angegeben
W = C₂H₅; X = CH₃; Y = (4-CI-C₆H₄).
- **Tabelle 19:**: A, B und D wie in Tabelle 1 angegeben
W = C₂H_{5;} X = Cl; Y = (4-Cl-C₆H₄).
- **Tabelle 20:**: A, B und D wie in Tabelle 1 angegeben
W = C₂H₅; X = C₂H₅; Y = (4-Cl-C₆H₄).
- **Tabelle 21:**: A, B und D wie in Tabelle 1 angegeben
W = C₂H₅; X = C₂H₅; Y = CH₃
- **Tabelle 22:**: A, B und D wie in Tabelle 1 angegeben
W = C₂H₅; X = CH₃; Y = CH₃.
- **Tabelle 23:**: A, B und D wie in Tabelle 1 angegeben
W = C₂H₅; X = Br; Y = CH₃.

Im einzelnen seien außer den bei den Herstellungsbeispielen genannten Verbindungen die folgenden Verbindungen der Formel (I-2-a) genannt:

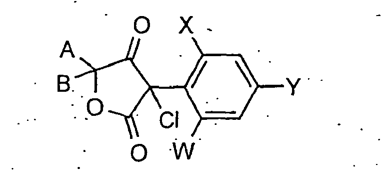

**Tabelle 23: W = CH₃, X = CH₃, Y = CH₃**

| A | B |
|---|---|
| CH₃ | CH₃ |
| C₂H₅ | CH₃ |
| C₃H₇ | CH₃ |
| i-C₃H₇ | CH₃ |
| -(CH₂)₅- | |
| -(CH₂)₂-O-(CH₂)₂- | |
| -CH₂-O-(CH₂)₃- | |
| -CH₂-CHCH₃-(CH₂)₃- | |
| -(CH₂)₂-CHCH₃-(CH₂)₂- | |
| -(CH₂)₂-CHOCH₃-(CH₂)₂- | |
| -(CH₂)₂-CHOC₂H₅-(CH₂)₂- | |

- **Tabelle 24:**: A und B wie in Tabelle 23 angegeben
W = CH₃; X= CH₃; Y = Cl.
- **Tabelle 25:**: A und B wie in Tabelle 23 angegeben
W = CH₃; X = CH₃; Y = Br.
- **Tabelle 26:**: A und B wie in Tabelle 23 angegeben
W=C₂H₅;X=CH₃;Y=CI.
- **Tabelle 27:**: A und B wie in Tabelle 23 angegeben
W = C₂H₅; X = CH₃; Y = Br.
- **Tabelle 28:**: A und B wie in Tabelle 23 angegeben
W = C₂H₅; X = C₂H₅; Y = Cl.
- **Tabelle 29:**: A und B wie in Tabelle 23 angegeben
W = C₂H₅; X = C₂H₅; Y = Br.
- **Tabelle 30:**: A und B wie in Tabelle 23 angegeben
W = CH₃; X = CH₃; Y = (4-Cl-C₆H₄).
- **Tabelle 31:**: A und B wie in Tabelle 23 angegeben
W = CH₃; X = C₂H₅ Y = (4-Cl-C₆H₄).
- **Tabelle 32**:: A und B wie in Tabelle 23 angegeben
W = C₂H₅; X = C₂H₅ ; Y = (4-Cl-C₆H₄).
- **Tabelle 33 :**: A und B wie in Tabelle 23 angegeben
W = Cl; X = CH₃; Y = (4-Cl-C₆H₄).
- **Tabelle 34:**: A und B wie in Tabelle 23 angegeben
W = Cl; X = C₂H₅; Y = (4-Cl-C₆H₄).
- **Tabelle 35:**: A und B wie in Tabelle 23 angegeben
W = C₂H₅; X = C₂H₅; Y = CH₃.
- **Tabelle 36:**: A und B wie in Tabelle 23 angegeben
W = C₂H₅; X = CH₃; Y = CH₃.

Die Verbindungen der Formel (I) sind bekannt (vgl. WO 03/029 213) und/oder können nach an sich bekannten Verfahren hergestellt werden. Verbindungen der Formel (I) und ihre Herstellung sind auch in den noch nicht veröffentlichten Deutschen Patentanmeldungen DE 102 490 55, DE 103 018 05 und DE 103 374 96 beschrieben.

Die die Kulturpflanzen-Verträglichkeit verbessernde Verbindung [Komponente (b)] sind Cloquintocet-mexyl, Fenchlorazol-ethyl, Isoxadifen-ethyl, Mefenpyr-diethyl, Furilazole, Fenclorim, Cumyluron, Dymron, Dimepiperate und die Verbindungen 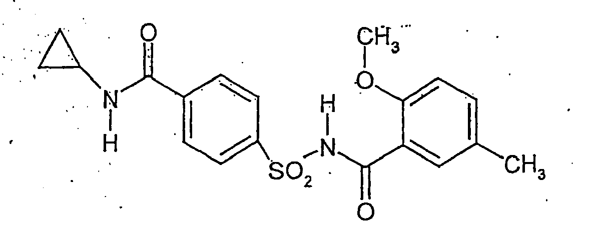 und 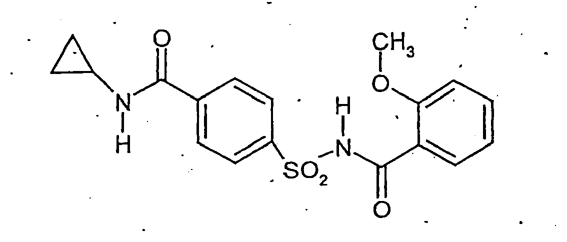 wobei Cloquintocet-mexyl und Mefenpyr-diethyl besonders hervorgehoben seien.

Die als Safener erfindungsgemäß zu verwendenden Verbindungen sind bekannt und/oder können nach an sich bekannten Verfahren hergestellt werden (vgl. WO-A-91/07874, WO-A-95/07897), (vgl. EP-A-191736), (vgl. DE-A-2218097, DE-A-2350547), (vgl. DE-A-19621522 / US-A-6235680), (vgl. WO-A-99/66795 / US-A-6251827),

Beispiele für die erfindungsgemäßen selektiv herbiziden Kombinationen aus jeweils einem Wirkstoff der Formel (I) und jeweils einem der oben definierten Safener sind in der nachstehenden Tabelle 7 aufgeführt.

**Tabelle 7: Beispiele für die erfindungsgemäßen Kombinationen**

| Wirkstoffe der Formel (I) | Safener |
|---|---|
| I-1 | Cloquintocet-mexyl |
| I-1 | Fenchlorazole-ethyl |
| I-1 | Isoxadifen-ethyl |
| I-1 | Mefenpyr-diethyl |
| I-1 | Furilazole |
| I-1 | Fenclorim |
| I-1 | Cumyluron |
| I-1 | Daimuron/Dymron |
| I-1 | Dimepiperate |
| I-1 | IIe-11 |
| I-1 | IIe-5 |
| I-2 | Cloquintocet-mexyl |
| I-2 | Fenchlorazole-ethyl |
| I-2 | Isoxadifen-ethyl |
| I-2 | Mefenpyr-diethyl |
| I-2 | Furilazole |
| I-2 | Fenclorim |
| I-2 | Cumyluron |
| I-2 | Daimuron /Dymron |
| I-2 | Dimepiperate |
| I-2 | IIe-11 |
| I-2 | IIe-5 |
| I-3 | Cloquintocet-mexyl |
| I-3 | Fenchlorazole-ethyl |
| I-3 | Isoxadifen-ethyl |
| I-3 | Mefenpyr-diethyl |
| I-3 | Furilazole |
| I-3 | Fenclorim |
| I-3 | Cumyluron |
| I-3 | Daimuron/Dymron |
| I-3 | Dimepiperate |
| I-3 | IIe-5 |
| I-3 | IIe-11 |
| I-4 | Cloquintocet-mexyl |
| I-4 | Fenchlorazole-ethyl |
| I-4 | Isoxadifen-ethyl |
| I-4 | Mefenpyr-diethyl |
| I-4 | Furilazole |
| I-4 | Fenclorim |
| I-4 | Cumyluron |
| I-4 | Daimuron /Dymron |
| I-4 | Dimepiperate |
| I-4 | IIe-11 |
| I-4 | IIe-5 |
| I-5 | Cloquintocet-mexyl |
| I-5 | Fenchlorazole-ethyl |
| I-5 | Isoxadifen-ethyl |
| I-5 | Mefenpyr-diethyl |
| I-5 | Furilazole |
| I-5 | Fenclorim |
| I-5 | Cumyluron |
| I-5 | Daimuron/Dymron |
| I-5 | Dimepiperate |
| I-5 | IIe-5 |
| I-5 | IIe-11 |
| I-6 | Cloquintocet-mexyl |
| I-6 | Fenchlorazole-ethyl |
| I-6 | Isoxadifen-ethyl |
| I-6 | Mefenpyr-diethyl |
| I-6 | Furilazole |
| I-6 | Fenclorim |
| I-6 | Cumyluron |
| I-6 | Daimuron/Dymron |
| I-6 | Dimepiperate |
| I-6 | IIe-5 |
| I-6 | IIe-11 |

Es wurde nun überraschend gefunden, dass die oben definierten Wirkstoffkombinationen aus substituierten Arylketonen der allgemeinein Formel (I) und Safenern (Antidots) aus der oben aufgeführten Gruppe (b) bei sehr guter Nutzpflanzen-Verträglichkeit eine besonders hohe herbizide Wirksamkeit aufweisen und in verschiedenen Kulturen, insbesondere in Getreide (vor allem Weizen), aber auch in Soja, Kartoffeln, Mais und Reis zur selektiven Unkrautbekämpfung verwendet werden können.

Dabei ist es als überraschend anzusehen, dass aus einer Vielzahl von bekannten Safenern oder Antidots, die befähigt sind, die schädigende Wirkung eines Herbizids auf die Kulturpflanzen zu antagonisieren, gerade die oben aufgeführten Verbindungen der Gruppe (b) geeignet sind, die schädigende Wirkung von substituierten Arylketonen auf die Kulturpflanzen annähernd vollständig aufzuheben, ohne dabei die herbizide Wirksamkeit gegenüber den Unkräutern zu beeinträchtigen.

Hervorgehoben sei hierbei die besonders vorteilhafte Wirkung der besonders und am meisten bevorzugten Kombinationspartner aus der Gruppe (b), insbesondere hinsichtlich der Schonung von Getreidepflanzen, wie z.B. Weizen, Gerste und Roggen, aber auch Mais und Reis, als Kulturpflanzen.

Die erfindungsgemäßen Wirkstoffkombinationen können z.B. bei den folgenden Pflanzen verwendet werden:
Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.
Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cuburbita, Helianthus.
Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.
Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Der vorteilhafte Effekt der Kulturpflanzen-Verträglichkeit der erfindungsgemäßen Wirkstoffkombinationen ist bei bestimmten Konzentrationsverhältnissen besonders stark' ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) Salzen 0,001 bis 1000 Gewichtsteile, vorzugsweise 0,01 bis 100 Gewichtsteile, besonders bevorzugt 0,05 bis 10 Gewichtsteile und am meisten bevorzugt 0,07 bis 1,5 Gewichtsteile einer der oben unter (b) genannten, die Kulturpflanzen Verträglichkeit verbessernden Verbindungen (Antidots/Safener).

Die Wirkstoffe bzw. Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapseltungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdöfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus.anorganischen und organischen Mehlen sowie Granulate aus organischem Material wie Sägemehl, Kokosnussschalen, Maiskolben und Tabakstengeln; als Emulgier-und/oder schaümerzeugende Mittel kommen in Frage: z.B. nicht-ionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische, pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffen einschließlich der safenden Wirkstoffe, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstruktur-Verbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Rako. Binol") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Losungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die Aufwandmengen der erfindungsgemäßen Wirkstoffkombinationen können in einem gewissen Bereich variiert werden; sie hängen u.a. vom Wetter und von den Bodenfaktoren ab. Im allgemeinen liegen die Aufwandmengen zwischen 0,005 und 5 kg pro ha, vorzugsweise zwischen 0,01 und 2 kg pro ha, besonders bevorzugt zwischen 0,05 und 1,0 kg pro ha.

Die erfindungsgemäßen Wirkstoffkombinationen können vor und nach dem Auflaufen der Pflanzen appliziert werden, also im Vorauflauf und Nachauflauf-Verfahren.

Die erfindungsgemäß einzusetzenden Safener können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Ablaufen der Pflanzen angewendet werden.

Erfindungsgemäß können die Dicarbonylverbindung der Formel (I) und die die KulturpflanzenVerträglichkeit verbessernde Verbindung auch zeitnah getrennt appliziert werden. Auch bei der Applikation der Safenerverbindung kurz vor oder nach der Behandlung mit der Dicarbonylverbindung der Formel (I) werden die erfindungsgemäßen Verträglichkeitsverbesserungen erzielt. Zeitnah bedeutet in diesem Zusammenhang bevorzugt eine Woche und besonders bevorzugt ein bis zwei Tage.

Zur Erfindung gehört daher auch ein Verfahren zum Bekämpfen von unerwünschtem Pflanzenwuchs, dadurch gekennzeichnet, dass man eine Dicarbonylverbindung der Formel (I) und die die Kulturpflanzenverträglichkeit verbessernde Verbindung in zeitlich naher Abfolge getrennt auf die Pflanzen oder ihre Umgebung einwirken lässt.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden, gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils, handelsüblichen oder in Gebrauch befindlichen Pflanzensorten behandelt. Unter Pflanzensorten versteht man Pflanzen mit bestimmten Eigenschaften ("Traits"), die durch konventionelle Züchtung, durch Mutagenese, oder auch durch rekombinante DNA-Techniken erhalten worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel. - auch in Kombination mit anderen agrochemischen Wirkstoffen, besseres Wachstum der Kulturpflanzen, erhöhte Toleranz der Kulturpflanzen gegenüber hohen oder niedrigen Temperaturen, erhöhte Toleranz der Kulturpflanzen gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinothricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid-tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinothricin, z.B. Raps), IMI® (Toleranz gegen Imidazolinone) und STS® (Toleranz gegen Sulfonylharnstoffe z.B. Mais) vertrieben werden. Als Herbizid-resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den Verbindungen der allgemeinen Formel I bzw. den erfindungsgemäßen Wirkstoffmischungen behandelt werden, wobei zusätzlich zu der guten Bekämpfung der Unkrautpflanzen die oben genannten synergistischen Effekte mit den transgenen Pflanzen oder Pflanzensorten auftreten. Die bei den Wirkstoffen bzw. Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Verbindungen bzw. Mischungen.

### Anwendungsbeispiele

### Herbizide Wirkung im Nachauflauf

Samen von mono- bzw. dikotylen Unkraut- bzw. Kulturpflanzen werden in Holzfasertöpfen oder in Plastiktöpfen in sandigem Lehmboden ausgelegt, mit Erde abgedeckt und im Gewächshaus, während der Vegetationsperiode auch im Freien ausserhalb des Gewächshauses, unter guten Wachstumsbedingungen angezogen. 2-3 Wochen nach der Aussaat werden die Versuchspflanzen im Ein- bis Drei-Blattstadium behandelt. Die als Spritzpulver (WP) oder Flüssigkeit (EC) formulierten Testverbindungen werden in verschiedenen Dosierungen mit einer Wasseraufwandmenge von umgerechnet 300 1/ha unter Zusatz von Netzmittel (0,2 bis 0,3 %) auf die Pflanzen und die Bodenoberfläche gespritzt. 3 bis 4 Wochen nach Behandlung der Versuchspflanzen wird die Wirkung der Präparate visuell im Vergleich zu unbehandelten Kontrollen bonitiert (herbizide Wirkung in Prozent (%): 100% Wirkung = Pflanzen sind abgestorben, 0 % Wirkung = wie Kontrollpflanzen).

### Verwendung von Safenern

Soll zusätzlich getestet werden, ob Safener die Pflanzenverträglichkeit von Testsubstanzen bei den Kulturpflanzen verbessern können, werden folgende Möglichkeiten für die Anwendung des Safeners verwendet:
- Samen der Kulturpflanzen werden vor der Aussaat mit der Safenersubstanz gebeizt (Angabe der Safenermenge in Prozent bezogen auf das Samengewicht)
- Kulturpflanzen werden vor Anwendung der Testsubstanzen mit dem Safener mit einer bestimmten Hektaraufwandmenge gespritzt (üblicherweise 1 Tag vor Anwendung der Prüfsubstanzen)
- der Safener wird zusammen mit der Testsubstanz als Tankmischung appliziert (Angabe der Safenermenge in g/ha oder als Verhältnis zum Herbizid).

Durch Vergleich der Wirkung von Testsubstanzen auf Kulturpflanzen, welche ohne und mit Safener behandelt wurden, kann die Wirkung der Safenersubstanz beurteilt werden.

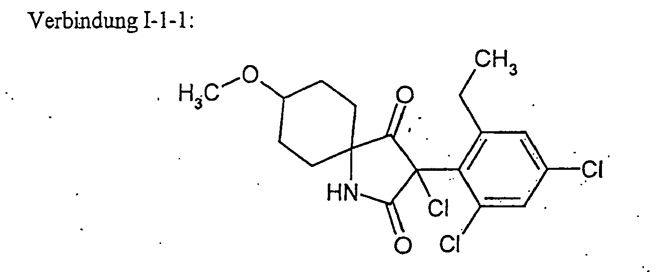

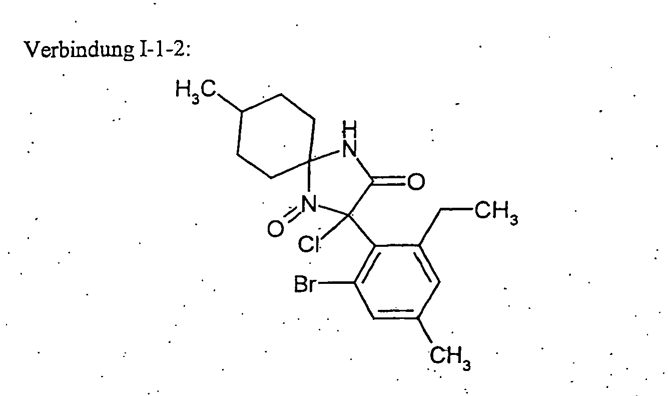

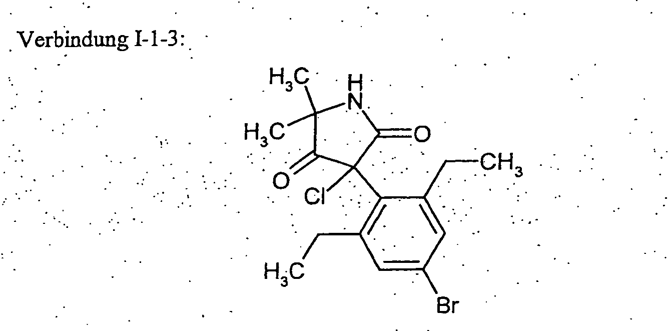

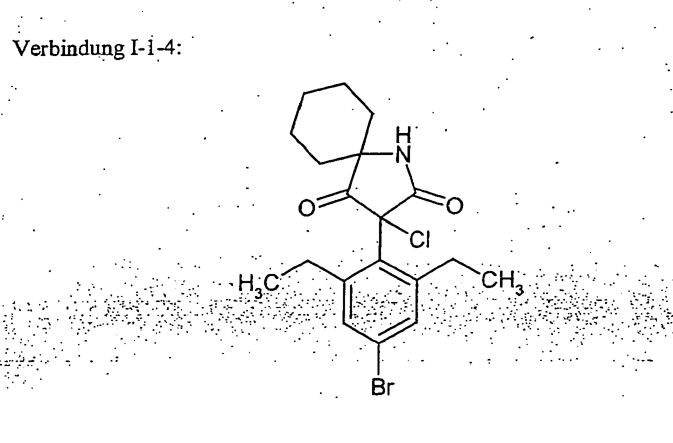

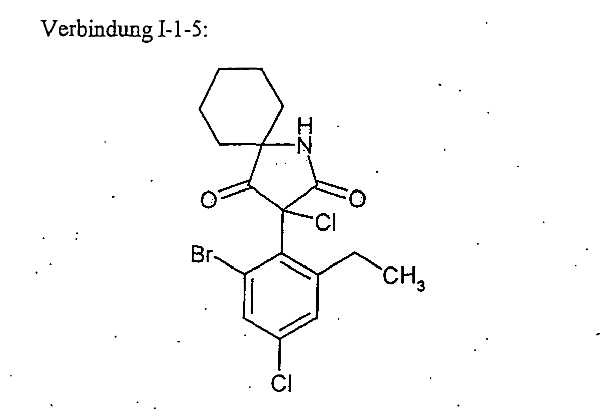

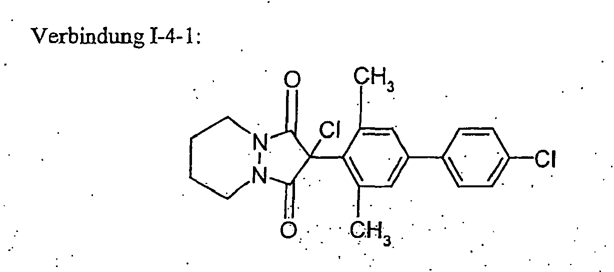

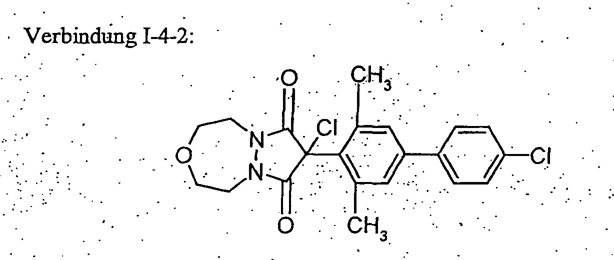

### Beispiel 1

### Freilandversuch/Nachauflauf

### Tankmischung

Verhältnis Mefenpyr-diethyl : Verbindung der Formel (I) = 2 : 1

| Verbindung | Aufwandmenge Herbizid | Sommergerste | Wintergerste | Sommerweizen | Winterweizen |
|---|---|---|---|---|---|
| Verb.-Nr.I-1-1 | 0,120 kg/ha | 40 | 30 | 15 | 20 |
| Verb.-Nr. I-1-1 +Mefenpyr | 0,120 kg/ha | 0 | 0 | 0 | 0 |
| Verb.-Nr I-1-2 | 0,120 kg/ha | 15 | 0 | 0 | 0 |
| Verb.-Nr I-1-2 + Mefenpyr | 0,120 kg/ha | 0 | 0 | 0 | 0 |

### Beispiel 2

### Gewächshausversuch / Nachauflauf

Kulturpflanzen werden einen Tag vor Anwendung der Verbindungen der Formel (I) mit dem Safener (100 g/ha als Aufwandmenge) behandelt.

| Verbindung | Aufwandmenge Herbizid | Sommergerste | Sommerweizen |
|---|---|---|---|
| Verb.-Nr. I-1-4 | 0,100 kg/ha | 10 | 10 |
| Verb. Nr. I-1-4 + Mefenpyr | 0,100 kg/ha | 0 | 10 |
| Verb.-Nr. I-1-5 | 0,100 kg/ha | 92 | 65 |
| | 0,050 kg/ha | 50 | 60 |
| | 0,025 kg/ha | 20 | 30 |
| Verb.-Nr. I-1-5 | 0,100 kg/ha | 40 | 25 |
| + Mefenpyr | 0,050 kg/ha | 20 | 10 |
| | 0,025 kg/ha | 10 | 5 |
| Verb.-Nr. I-4-1 | 0,100 kg/ha | 8.0 | 60 |
| | 0,050 kg/ha | 80 | 60 |
| | 0,025 kg/ha | 20 | 20 |
| Verb.-Nr. I-4-1 | 0,100 kg/ha | 20 | 15 |
| +Mefenpyr | 0,050 kg/ha | 0 | 5 |
| | 0,025 kg/ha | 0 | 0 |
| Verb.-Nr. I-4-2 | 0,100 kg/ha | 97 | 97 |
| | 0,050 kg/ha | 95 | 97 |
| | 0,025 kg/ha | 40 | 60 |
| Verb.-Nr. I-4-2 | 0,100 kg/ha | 20 | 80 |
| + Mefenpyr | 0,050 kg/ha | 10 | 40 |
| | 0,025 kg/ha | 0 | 20 |

### Beispiel 3

### Gewächshausversuch / Nachauflauf

### Mais der Sorte Lorenzo

Safenerzusatz:
a) Samen der Kulturpflanzen werden vor der Aussaat mit der Verbindung der Formel (IIe-5) gebeizt (0,5 % Safener bezogen auf das Samengewicht).
b) Kulturpflanzen werden einen Tag vor Anwendung der Verbindungen der Formel (I) mit der Verbindung der Formel (IIe-5) (100 g/ha als Aufwandmenge) behandelt.
c) Kulturpflanzen, werden einen Tag vor Anwendung der Verbindungen der Formel (I) mit Isoxadifen (100 g/ha als Aufwandmenge) behandelt

Für die Spritzbehandlung wurde das Herbizid als WP20 und der Safener als WP 10 formuliert.

| Verbindung | Aufwandmenge Herbizid | Mais |
|---|---|---|
| Verbindung I-1-1 | 0,050 kg/ha | 100 |
| | 0,025 kg/ha | 100 |
| | 0,013 kg/ha | 99 |
| Verbindung I-1-1 | 0,050 kg/ha | 100 |
| + Safenerzusatz nach a) | 0,025 kg/ha | 95 |
| | 0,013 kg/ha | 65 |
| Verbindung I-1-1 | 0,050 kg/ha | 100 |
| + Safenerzusatz nach b) | 0,025 kg/ha | 100 |
| | 0,013 kg/ha | 90 |
| Verbindung I-1-1 | 0,050 kg/ha | 100 |
| + Safenenusatz nach c) | 0,025 kg/ha | 100 |
| | 0,013 kg/ha | 100 |
| Verbindung I-1-3 | 0,050 kg/ha | 85 |
| | 0,025 kg/ha | 0 |
| | 0,013 kg/ha | 0 |
| Verbindung I-1-3 | 0,050 kg/ha | 5 |
| + Safenerzusatz nach a) | 0,025kg/ha | 0 |
| | 0,013 kg/ha | 0 |
| Verbindung I-1-3 | 0,050 kg/ha | 10 |
| + Safenerzusatz nach b) | 0,025 kg/ha | 0 |
| | 0,013 kg/ha | 0 |
| Verbindung I-1-3 | 0,050 kg/ha | 5 |
| + Safenerzusatz nach c) | 0,025 kg/ha | 0 |
| | 0,013 kg/ha | 0 |

## Patentansprüche

1. Mittel enthaltend einen wirksamen Gehalt an einer Wirkstoffkombination umfassend
(a) mindestens eine substituierte, cyclische Dicarbonylverbindung der Formel (I) 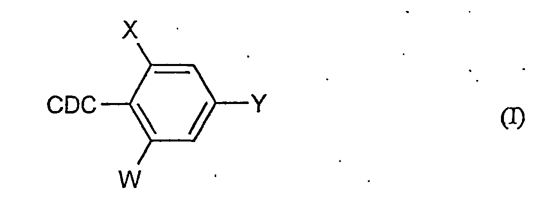 in welcher
W für Wasserstoff, Chlor, Brom; Methyl, Ethyl, Methoxy oder Ethoxy steht,
X für Chlor, Brom, Methyl, Ethyl, Propyl, Methoxy, Ethoxy, Trifluormethyl, Difluormethoxy, Trifluormethoxy oder Cyano steht,
Y für Wasserstoff, Chlor, Brom, Methyl, Triflourmethyl oder für den Rest 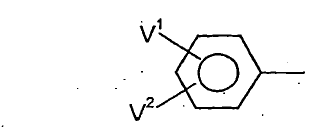 steht, worin
V¹ für Wasserstoff, Fluor, Chlor, Brom, Methyl, Ethyl, tert.-Butyl, Methoxy, Trifluormethyl oder Trifluormethoxy steht,
V² für Wasserstoff, Fluor, Chlor, Methyl, Methoxy oder Trifluormethyl steht,
CDC für eine der Gruppen 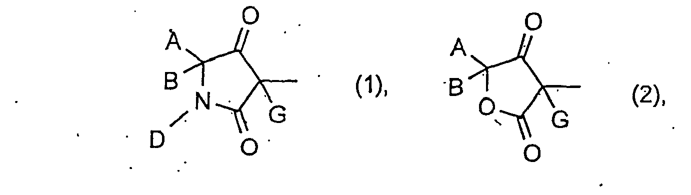 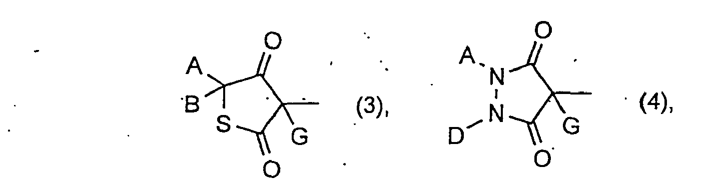 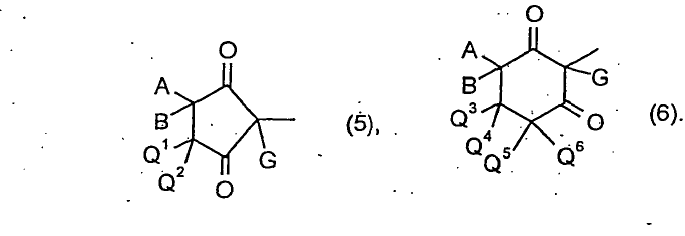 steht,
A für Wasserstoff, jeweils gegebenenfalls einfach bis dreifach durch Fluor substituiertes C₁-C₄-Alkyl oder C₁-C₂-AlkoXy-C₁-C₂-alkyl, gegebenenfalls einfach durch Fluor, Methyl oder Methoxy substituiertes C₃-C₆-Cycloalkyl steht,
B für Wasserstoff, Methyl oder Ethyl steht, oder
A, B und das Kohlenstoffatom an das sie gebunden sind für gesättigtes C₅-C₆-Cycloalkyl stehen, in welchem gegebenenfalls ein Ringglied durch Sauerstoff ersetzt ist und welches gegebenenfalls einfach durch Methyl, Trifluormethyl, Methoxy, Ethoxy, Propoxy, Butoxy oder Isobutoxy substituiert ist, mit der Maßgabe, dass Q³ dann ganz besonders bevorzugt für Wasserstoff steht, oder
A, B und das Kohlenstoffatom, an das sie gebunden sind, für C₅-C₆-Cycloalkyl stehen, welches durch eine mit zwei nicht direkt benachbarten Sauerstoffatomen enthaltende Mkylendioxyl-Gruppe substituiert ist, mit der Maßgabe, dass Q³ dann ganz besonders bevorzugt für Wasserstoff steht
D für Wasserstoff, für jeweils gegebenenfalls einfach bis dreifach durch Fluor substituiertes C₁-C₄-Alkyl, C₃-C₄-Alkenyl, C₁-C₂-Alkoxy-C₂-C₃-alkyl oder C₃-C₆-Cycloalkyl, in welchem gegebenenfalls eine Methylengruppe durch Sauerstoff oder Schwefel ersetzt ist oder (jedoch nicht im Fall der Verbindungen der Formeln (I-1)) für jeweils gegebenenfalls einfach bis zweifach durch Fluor, Chlor, Brom, Methyl, Ethyl, n-Propyl, iso-Propyl, Methoxy, Ethoxy, Trifluormethyl oder Trifluormethoxy substituiertes Phenyl oder Pyridyl steht, oder
A und D gemeinsam für gegebenenfalls substituiertes C₃-C₅-Akandiyl stehen, worin gegebenenfalls ein Kohlenstoffatom durch Sauerstoff oder Schwefel ersetzt ist und welches gegebenenfalls einfach oder zweifach durch Methyl substituiert ist, oder
A und D (im Fall der Verbindungen der Formel (I-1)) gemeinsam mit den Atomen, an die sie gebunden sind, für die Gruppe 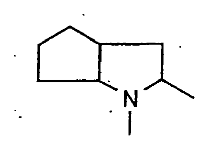 stehen,
AD-1
A und Q¹ gemeinsam für gegebenenfalls einfach oder zweifach durch Methyl oder Methoxy substituiertes C₃-C₄-Alkandiyl stehen, oder
Q¹ für Wasserstoff steht,
Q² für Wasserstoff steht,
Q⁴, Q⁵ und unabhängig voneinander für Wasserstoff oder Methyl stehen,
Q³ für Wasserstoff, Methyl, Ethyl oder C₃-C₆-Cycloalkyl steht, oder
Q³ und Q⁴ gemeinsam mit dem Kohlenstoff, an den sie gebunden sind, für einen gegebenenfalls einfach durch Methyl oder Methoxy substituierten gesättigten C₅-C₆-Ringstehen, in welchem gegebenenfalls ein Ringglied durch Sauerstoff oder Schwefel ersetzt ist, mit der Maßgabe, dass A dann ganz besonders bevorzugt für Wasserstoff steht, und
G für Chlor und Nitro steht, einschließlich aller isomeren Formen, und zumindest eine die Kulturpflanzen-Verträglichkeit verbessernde Verbindung aus der folgenden Gruppe von Verbindungen.
Cloquintocet-mexyl, Fenchlorazole-ethyl, Isoxadifen-ethyl, Mefenpyr-diethyl, Furilazole, Fenclorim, Cumyluron, Dymron, Dimepiperate oder die Verbindungen 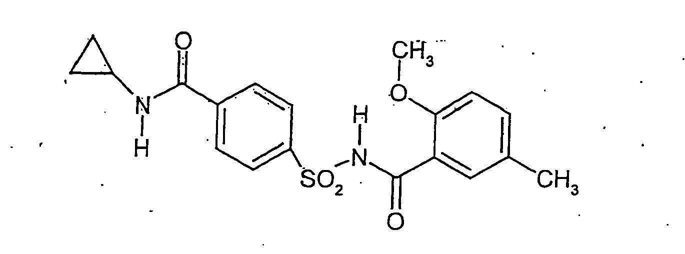 und

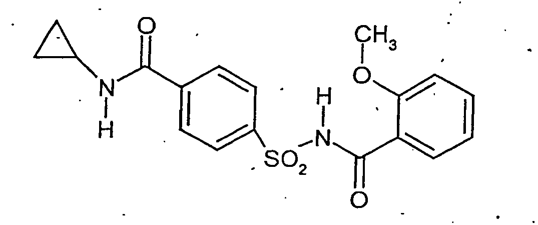

2. Mittel gemäß Ansprüch 1, bei dem die Kulturpflazen-Verträglichkeit verbessernde Verbindung Cloquintocet-mexyl oder Mefenpyr-diethyl ist.

3. Verfahren zum Bekämpfen von unerwünschtem Pflanzenwuchs, **dadurch gekennzeichnet, dass** man ein Mittel gemäß Anspruch 1 auf die Pflanzen oder ihre Umgebung einwirken lässt.

4. Verwendung eines Mittels gemäß Anspruch 1. zum Bekämpfen von unerwünschten Pflanzenwuchs.

5. Verfahren zum Bekämpfen von unerwünschtem Pflanzenwuchs, **dadurch gekennzeichnet, dass** man eine Dicarbonylverbindung der Formel (I) gemäß Anspruch 1 und die die Kulturpflanzenverträglichkeit verbessernde Verbindung gemäß Anspruch 1 in zeitlich naher Abfolge getrennt auf die Pflanzen oder ihre Umgebung einwirken lässt.

## Claims

1. Composition, comprising an effective amount of an active compound combination comprising
(a) at least one substituted cyclic dicarbonyl compound of the formula (I) 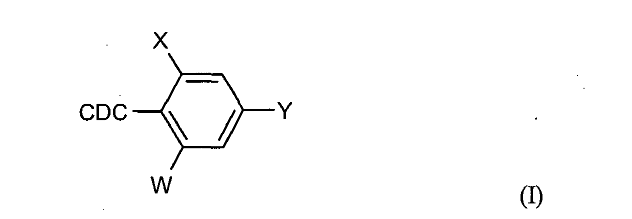 in which
W represents hydrogen, chlorine, bromine, methyl, ethyl, methoxy or ethoxy,
X represents chlorine, bromine, methyl, ethyl, propyl, methoxy, ethoxy, trifluoromethyl, difluoromethoxy, trifluoromethoxy or cyano,
Y represents hydrogen, chlorine, bromine, methyl, trifluoromethyl or represents the radical 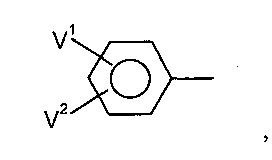 in which
V¹ represents hydrogen, fluorine, chlorine, bromine, methyl, ethyl, tert-butyl, methoxy, trifluoromethyl or trifluoromethoxy,
V² represents hydrogen, fluorine, chlorine, methyl, methoxy or trifluoromethyl,
CDC represents one of the groups 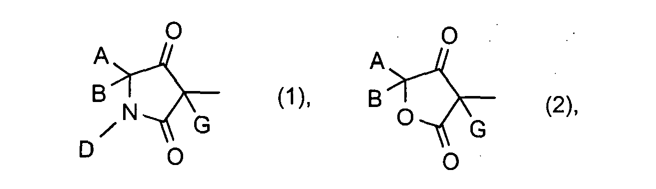 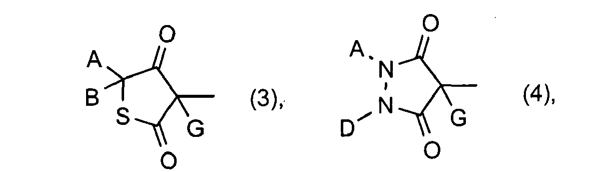 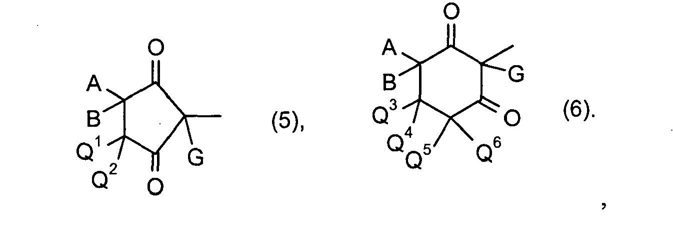
A represents hydrogen, represents C₁-C₄-alkyl or C₁-C₂-alkoxy-C₁-C₂-alkyl, each of which is optionally mono- to trisubstituted by fluorine, represents C₃-C₆-cycloalkyl which is optionally monosubstituted by fluorine, methyl or methoxy,
B represents hydrogen, methyl or ethyl, or
A, B and the carbon atom to which they are attached represent saturated C₅-C₆-cycloalkyl in which optionally one ring member is replaced by oxygen and which is optionally monosubstituted by methyl, trifluoromethyl, methoxy, ethoxy, propoxy, butoxy or isobutoxy, with the proviso that Q³ in this case very particularly preferably represents hydrogen, or
A, B and the carbon atom to which they are attached represent C₅-C₆-cycloalkyl which is substituted by an alkylenedioxyl group which contains two not directly adjacent oxygen atoms, with the proviso that Q³ in this case very particularly preferably represents hydrogen,
D represents hydrogen, represents C₁-C₄-alkyl, C₃-C₄-alkenyl, C₁-C₂-alkoxy-C₂-C₃-alkyl or C₃-C₆-cycloalkyl in which optionally one methylene group is replaced by oxygen or sulfur, each of which radicals is optionally mono- to trisubstituted by fluorine, or (but not in the case of the compounds of the formulae (1-1)) represents phenyl or pyridyl, each of which is optionally mono- to disubstituted by fluorine, chlorine, bromine, methyl, ethyl, n-propyl, isopropyl, methoxy, ethoxy, trifluoromethyl or trifluoromethoxy, or
A and D together represent optionally substituted C₃-C₅-alkanediyl in which optionally one carbon atom is replaced by oxygen or sulfur and which is optionally mono- or disubstituted by methyl, or
A and D (in the case of the compounds of the formula (I-1)) together with the atoms to which they are attached represent the group 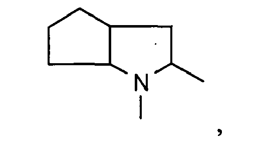 AD-1
A and Q¹ together represent C₃-C₄-alkanediyl which is optionally mono- or disubstituted by methyl or methoxy, or
Q¹ represents hydrogen,
Q² represents hydrogen,
Q⁴, Q⁵ and independently of one another represent hydrogen or methyl,
Q³ represents hydrogen, methyl, ethyl or C₃-C₆-cycloalkyl, or
Q³ and Q⁴ together with the carbon to which they are attached represent a saturated C₅-C₆-ring which is optionally monosubstituted by methyl or methoxy and in which optionally one ring member is replaced by oxygen or sulfur, with the proviso that A in this case very particularly preferably represents hydrogen, and
G represents chlorine and nitro, including all isomeric forms and at least one crop plant compatibility-improving compound from the following group of compounds:
cloquintocet-mexyl, fenchlorazole-ethyl, isoxadifen-ethyl, mefenpyr-diethyl, furilazole, fenclorim, cumyluron, dymron, dimepiperate or the compounds 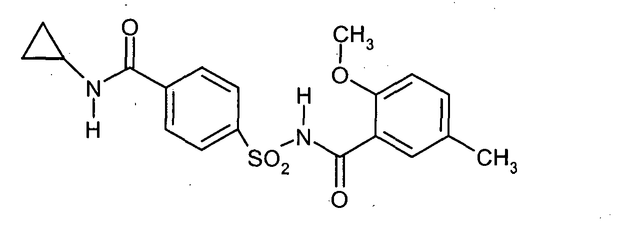 and

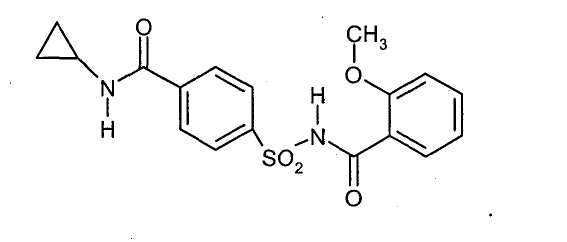

2. Composition according to Claim 1, in which the crop plant compatibility-improving compound is cloquintocet-mexyl or mefenpyr-diethyl.

3. Method for controlling unwanted vegetation, **characterized in that** a composition according to Claim 1 is allowed to act on the plants or their habitat.

4. Use of a composition according to Claim 1 for controlling unwanted vegetation.

5. Method for controlling unwanted vegetation, **characterized in that** a dicarbonyl compound of the formula (I) according to Claim 1 and the crop plant compatibility-improving compound according to Claim 1 are allowed to act on the plants or their habitat separately, one soon after the other.

## Revendications

1. Agent, contenant une teneur efficace en une combinaison de substances actives comprenant
(a) au moins un composé dicarbonyle cyclique substitué de la formule (I) 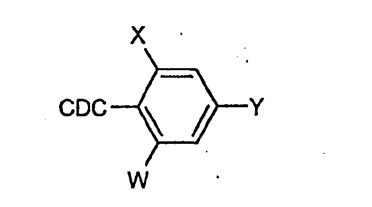 dans laquelle
W représente l'hydrogène, le chlore, le brome, un groupe méthyle, un groupe éthyle, un groupe méthoxy ou un groupe éthoxy
X représente le chlore, le brome, un groupe méthyle, éthyle, propyle, méthoxy, éthoxy, trifluorométhyle difluorométhoxy, trifluorométhoxy ou cyano,
Y représente l'hydrogène, le chlore, le brome, un groupe méthyle, trifluorométhyle ou le reste 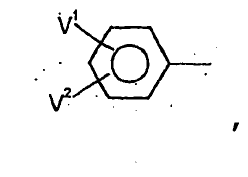 dans lequel
V¹ représente l'hydrogène, le fluor, le chlore, le brome, un groupe méthyle, éthyle, tert-butyle, méthoxy, trifluorométhyle ou trifluorométhoxy,
V² représente l'hydrogène, le fluor, le chlore, un groupe méthyle, méthoxy ou trifluorométhyle,
CDC représente un des groupes 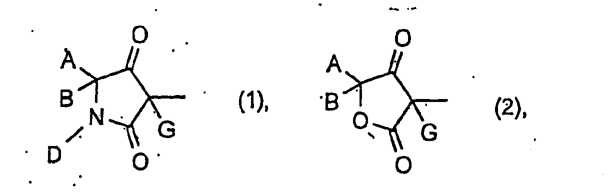 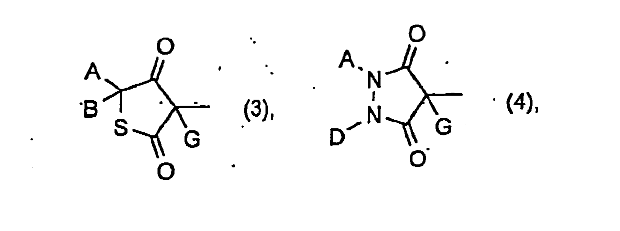 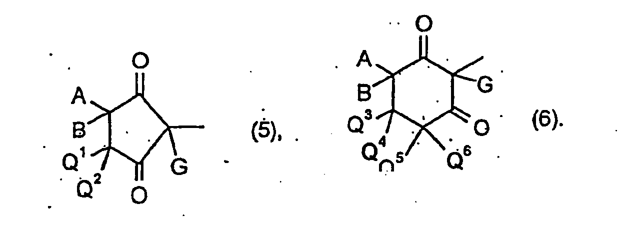
A représente l'hydrogène, un groupe alkyle en C₁-C₄ ou (alcoxy en C₁-C₂)-(alkyle en C₁-C₂), respectivement le cas échéant substitué de une à trois fois par le fluor, un groupe cycloalkyle en C₃-C₆, le cas échéant substitué une fois par le fluor, un groupe méthyle ou méthoxy,
B représente l'hydrogène, un groupe méthyle ou éthyle, ou
A, B et l'atome de carbone auquel ils sont liés représentent un groupe cycloalkyle saturé en C₅-C₆, dans lequel le cas échéant un membre du cycle est remplacé par l'oxygène et lequel est le cas échéant substitué une fois par un groupe méthyle, trifluorométhyle, méthoxy, éthoxy, propoxy, butoxy ou isobutoxy, avec la condition que Q³ représente alors de manière tout particulièrement préférée l'hydrogène, ou
A, B et l'atome de carbone auquel ils sont liés représentent un groupe cycloalkyle en C₅-C₆, lequel est substitué par un groupe alkylènedioxyle contenant deux atomes d'oxygène non directement voisins, avec la condition que Q³ représente alors de manière tout particulièrement préférée l'hydrogène,
D représente l'hydrogène, un groupe alkyle en C₁-C₄, alcényle en C₃-C₄, (alcoxy en C₁-C₂)-(alkyle en C₂-C₃) ou cycloalkyle en C₃-C₆, respectivement le cas échéant substitué de une à trois fois par le fluor, dans lequel le cas échéant un groupe méthylène est remplacé par l'oxygène ou le soufre ou (cependant pas dans le cas des composés des formules (I-1)) un groupe phényle ou pyridyle, respectivement le cas échéant substitué une ou deux fois par le fluor, le chlore, le brome, un groupe méthyle, éthyle, n-propyle, isopropyle, méthoxy, éthoxy, trifluorométhyle ou trifluorométhoxy, ou
A et D représentent ensemble un groupe alcanediyle en C₃-C₅ le cas échéant substitué, dans lequel le cas échéant un atome de carbone est remplacé par l'oxygène ou le soufre et qui est le cas échéant substitué une fois ou deux fois par un groupe méthyle, ou
A et D (dans le cas des composés de la formule (I-1)) représentent ensemble avec les atomes auxquels ils sont liés, le groupe 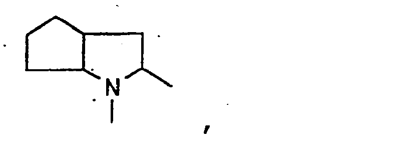
AD-1
A et Q¹ représentent ensemble un groupe alcanediyle en C₃-C₄ le cas échéant substitué une fois ou deux fois par un groupe méthyle ou méthoxy, ou
Q¹ représente l'hydrogène,
Q2 représente l'hydrogène,
Q⁴, Q⁵ représentent indépendamment l'un de l'autre l'hydrogène ou un groupe méthyle,
Q³ représente l'hydrogène, un groupe méthyle, éthyle ou cycloalkyle en C₃-C₆, ou
Q³ et Q⁴ représentent ensemble avec l'atome de carbone auquel ils sont liés un cycle saturé en C₅-C₆, le cas échéant substitué une fois ou deux fois par un groupe méthyle ou méthoxy, dans lequel le cas échéant un membre du cycle est remplacé par l'oxygène ou le soufre, avec la condition que A représente alors de manière particulièrement préférée l'hydrogène, et
G représente le chlore et un groupe nitro, y compris toutes les formes isomères, et au moins un composé améliorant la compatibilité avec les plantes cultivées du groupe suivant de composés
cloquintocet-mexyle, fenchlorazole-ethyle, isoxadifène-éthyle, méfenpyr-diéthyle, furilazole, fenclorim, cumyluron, dymron, dimépipérase ou les composés 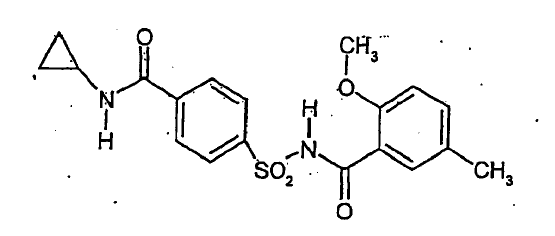 et

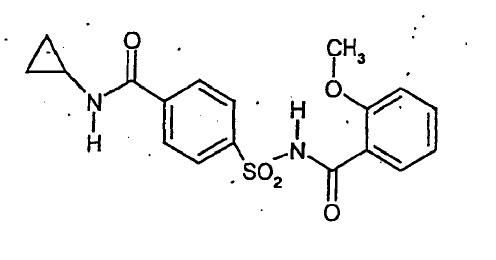

2. Agent selon la revendication 1, pour lequel le composé améliorant la compatibilité avec les plantes cultivées est le cloquintocet-mexyle ou le méfenpyr-diéthyle.

3. Procédé de lutte contre la croissance indésirable des plantes, **caractérisé en ce qu'**on fait agir un agent selon la revendication 1 sur les plantes ou leur environnement

4. Utilisation d'un agent selon la revendication 1 pour la lutte contre la croissance indésirable des plantes.

5. Procédé de lutte contre la croissance indésirable des plantes, **caractérisé en ce qu'**on fait agir sur les plantes ou leur environnement un agent composé dicarbonyle de la formule (I) selon la revendication 1 et le composé améliorant la compatibilité avec les plantes cultivées selon la revendication 1, séparément selon une séquence rapprochée dans le temps.
